# EUROPÄISCHE PATENTSCHRIFT

(11) **EP 1 961 841 B1**
(45) Veröffentlichungstag und Bekanntmachung des Hinweises auf die Patenterteilung: **10.04.2013**
(21) Anmeldenummer: 07003516.7
(22) Anmeldetag: 21.02.2007
(51) Int. Cl.: C25D 5/18, C25D 5/54, C25D 7/00, B01J 37/34, C25D 17/02, H01M 4/92, H01M 4/88, H01M 4/90, B01J 23/89

(54) **Verfahren zur elektrochemischen Abscheidung von Katalysatorpartikeln auf kohlefaserhaltigen Substraten sowie Vorrichtung dafür**
Method for electroplating of catalyst particles on substrates containing carbon fibres and device therefor
Procédé de dépôt électrochimique de particules de catalyseur sur des substrats contenant des fibres de carbone et son dispositif

(43) Veröffentlichungstag der Anmeldung: 27.08.2008
(73) Patentinhaber: SolviCore GmbH & Co KG, 63457 Hanau-Wolfgang (DE)
(72) Erfinder: Natter, Harald, 66117 Saarbrücken (DE); Keller, Vivien, 66123 Saarbrücken (DE); Hempelmann, Rolf, 66386 St. Ingbert (DE); Lopez, Marco, 60433 Frankfurt (DE)

(56) Entgegenhaltungen:
- WO-A-02/13301
- DE-A1- 10 225 568
- LOFFLER M-S ET AL: "Preparation and characterisation of Pt-Ru model electrodes for the direct methanol fuel cell" ELECTROCHIMICA ACTA, ELSEVIER SCIENCE PUBLISHERS, BARKING, GB, Bd. 48, Nr. 20-22, 30. September 2003 (2003-09-30), Seiten 3047-3051, XP004447000 ISSN: 0013-4686
- LOFFLER M-S ET AL: "New preparation technique and characterisation of nanostructured catalysts for polymer membrane fuel cells" SCRIPTA MATERIALIA, ELSEVIER, AMSTERDAM, NL, Bd. 44, Nr. 8-9, 18. Mai 2001 (2001-05-18), Seiten 2253-2257, XP004327748 ISSN: 1359-6462
- ALCAIDE ET AL: "New approach to prepare Pt-based hydrogen diffusion anodes tolerant to CO for polymer electrolyte membrane fuel cells" CATALYSIS TODAY, ELSEVIER, Bd. 116, Nr. 3, 15. August 2006 (2006-08-15), Seiten 408-414, XP005590599 ISSN: 0920-5861

## Beschreibung

Die vorliegende Erfindung beschreibt ein Verfahren zur elektrochemischen Abscheidung von Katalysatorpartikeln auf kohlefaserhaltigen Substraten sowie eine Vorrichtung dafür. Die mit Katalysatorpartikeln beschichteten Substrate finden Verwendung zur Herstellung von Elektroden, zum Beispiel für elektrochemische Vorrichtungen wie Brennstoffzellen, Membran-Brennstoffzellen, Elektrolyseure oder elektrochemische Sensoren. Insbesondere finden sie Verwendung zur Herstellung von Gasdiffusionselektroden ("GDE") und Membran-Elektroden-Einheiten ("MEE") für Polymerelektrolyt-membran-Brennstoffzellen ("PEMBZ"; engl. polymer electrolyte fuel cells; "PEMFC") und Direkt-Methanol-Brennstoffzellen ("DMBZ"; engl. direct methanol fuel cells; "DMFC").

Brennstoffzellen wandeln einen Brennstoff und ein Oxidationsmittel örtlich voneinander getrennt an zwei Elektroden in Strom, Wärme und Wasser um. Als Brennstoff kann Wasserstoff, ein wasserstoffreiches Gas oder Methanol, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen zunehmend Bedeutung für mobile, stationäre sowie portable Anwendungen.

Unter einem Brennstoffzellenstapel wird eine stapelweise Anordnung ("Stack") von Brennstoffzelleneinheiten verstanden. Eine Brennstoffzelleneinheit wird im folgenden auch kurz als Brennstoffzelle bezeichnet. Sie enthält jeweils eine Membran-Elektroden-Einheit, die zwischen sog. bipolaren Platten, die auch als Separatorplatten bezeichnet werden und zur Gaszufuhr und Stromleitung dienen, angeordnet ist.

Das Kernstück der Membran-Brennstoffzelle ist die Membran-Elektroden-Einheit ("MEE"). Die Membran-Elektroden-Einheit besitzt einen sandwichartigen Aufbau und besteht in der Regel aus fünf Lagen. Zur Herstellung dieser fünflagigen Membran-Elektroden-Einheit werden das Anoden-Gasverteilersubstrat (Anoden-"GDL") auf der Vorderseite, die Katalysatorschicht auf der Vorderseite, das Kathoden-Gasverteilersubstrat auf der Rückseite und die Katalysatorschicht auf der Rückseite mit der Ionomermembran in der Mitte sandwichartig verbunden bzw. laminiert. Die Abdichtung kann mit einem geeigneten Dichtungsmaterial erfolgen.

Bei der PEMFC besteht die Polymerelektrolyt-Membran aus protonenleitenden Polymermaterialien. Diese Materialien werden im folgenden auch kurz als Ionomere bezeichnet. Bevorzugt wird ein Tetrafluorethylen-Fluorvinylether-Copolymer mit Säurefunktionen, insbesondere mit Sulfonsäuregruppen, verwendet. Solche Materialien werden zum Beispiel unter den Handelsnamen Nafion^{®} (E. I. DuPont) oder Flemion^{®} (Asahi Glass Co.) vertrieben. Es sind jedoch auch andere, insbesondere fluorfreie Ionomermaterialien, wie sulfonierte Polyetherketone oder Arylketone oder Polybenzimidazole aber auch keramische Materialien einsetzbar.

Bei der MEE-Herstellung werden in der Regel zunächst die Katalysatorschichten auf die Gasverteilersubstrate aufgebracht. Die so hergestellten Gasdiffusionselektroden ("GDE", nachfolgend auch kurz als "Elektroden" bezeichnet) werden dann mit der Vorder- und Rückseite einer Ionomermembran verbunden. Anschließend wird ggf. Dichtungsmaterial am Rand angebracht. Es sind jedoch auch Verfahren bekannt, bei denen die Katalysatorschicht zunächst auf die Membran aufgebracht wird.

Konventionell werden Gasdiffusionselektroden hergestellt, indem man die Gasverteilersubstrate mit Katalysator beschichtet. Dabei bringt man geeignete rußgeträgerten Edelmetallkatalysatoren (z.B. des Typs Pt/C) auf die Oberfläche des Gasverteilersubstrates auf. In der Regel werden hierfür handelsübliche Pt/C-Trägerkatalysatoren bzw. PtRu/C-Trägerkatalysatoren mit einer Edelmetall-Beladung von 20 bis 80 Gew. % (bezogen auf das Gesamtgewicht) eingesetzt. Zwei so hergestellte Gasdiffusionselektroden werden anschließend mit der Vorder- und Rückseite einer Ionomermembran verbunden (beispielsweise durch Laminieren). Dabei werden die Katalysatorpartikel in die Membranoberfläche einpresst. Nachteilig dabei ist der niedrige Katalysator-Nutzungsgrad. Bis zu 30 % der teuren Pt-Partikel bleiben unwirksam, denn sie liegen nicht in der sogenannten Drei-Phasen-Zone. Katalytische Aktivität kann nur dort entstehen, wo (a) die ionenleitende Phase, d.h. die Ionomermembran zur Abführung der Protonen, (b) die elektronenleitende Phase, d.h. der Elektrokatalysator im elektrischen Kontakt mit dem Gasverteilersubstrat und (c) die Gas- bzw. Flüssigphase zur Zuführung von Wasserstoff/Methanol bzw. Sauerstoff und zur Abführung des gebildeten Wassers) zusammentreffen. Aufgrund des niedrigen Katalysatornutzungsgrades haben die meisten nach diesem Verfahren hergestellten Membran-Elektroden-Einheiten eine hohe Katalysatorbeladung und damit einen hohen Edelmetallverbrauch.

Zur Kommerzialisierung der Brennstoffzellentechnologie, insbesondere im mobilen Bereich, werden jedoch Komponenten (z.B. Elektroden, Membran-Elektroden-Einheiten oder Stacks) mit niedrigem Edelmetallverbrauch und hoher elektrischer Leistung benötigt, die mittels wirtschaftlicher, zur Serienfertigung geeigneter Verfahren hergestellt werden können.

Aus der US 5,084,144 und der US 6,080,504 sind elektrochemische Verfahren zur Herstellung von Gasdiffusionselektroden bekannt, bei denen ein elektrisch leitfähiges Substrat und eine Gegenelektrode mit einem galvanischen Bad in Verbindung gebracht werden, das Metallionen enthält. Die Abscheidung des katalytisch aktiven Metalls erfolgt durch kurze kathodische Strompulse.

Die WO 00/56453 beschreibt ebenfalls ein Verfahren zur elektrochemischen Abscheidung eines Katalysators aus einem Elektrolyten, der das katalytisch aktive Material enthält.

Der Nachteil der oben genannten Verfahren besteht darin, dass dabei teure edelmetallhaltige galvanische Bäder erforderlich sind. Galvanische Bäder sind grundsätzlich unselektiv; die Ausnutzung der im Galvanikbad gelösten Edelmetalle ist sehr beschränkt. Weiterhin kommt es zu Edelmetallverlusten bei ihrer Aufarbeitung.

In der DE 197 20 688 C1 wird ein Verfahren zur Herstellung einer Elektroden-Festelektrolyt-Einheit vorgeschlagen, bei dem das Edelmetallsalz zwischen eine Elektrode und einen Festelektrolyten (d.h. eine Ionomermembran) gebracht wird und anschließend das Edelmetall elektrochemisch in der Dreiphasenzone abgeschieden wird. Es wird kein galvanisches Bad verwendet. Nachteilig bei diesem Verfahren ist jedoch, dass der Festelektrolyt durch ionische Salzreste kontaminiert werden kann. Weiterhin muss die Membran zur Aufrechterhaltung ihrer Leitfähigkeit während des Verfahrens kontinuierlich mit Wasser befeuchtet werden. Es hat sich gezeigt, dass das Wasser die wasserlöslichen Edelmetallsalze teilweise aus der Precursorschicht herausspült, so dass es zu unerwünschten Edelmetallverlusten kommt, die das Verfahren verteuern.

Die EP 1 307 939 B1offenbart ein Verfahren zur Beschichtung einer Membran-Elektroden-Einheit mit Katalysator sowie eine Vorrichtung dafür. Bei diesem Prozess wird eine Schicht, die eine metallische Verbindung als Katalysatorvorstufe enthält (auch als "Precursorschicht" bezeichnet) auf eine Ionomermembran aufgebracht und anschließend die Katalysatorpartikel darauf elektrochemisch abgeschieden, wobei sich die Membran während der Elektrodeposition in einer wasserdampfhaltigen Atmosphäre befindet. Nachteil dieses Verfahrens ist, dass wiederum eine Membran als Festelektrolyt verwendet wird und diese während des Prozesses mit den wasserlöslichen Precursorverbindungen kontaminiert werden kann. Das Verfahren ist darüber hinaus umständlich und teuer, da die Membran ständig in einer wasserdampfhaltigen Atmosphäre gehalten werden muss.

M. S. Löffler, B. Groß, H. Natter, R. Hempelmann, Th. Krajewski und J. Divisek berichten in Phys. Chem. Chem. Phys., 2001, 3, Seiten 333 - 336 über die elektrochemische Abscheidung von Pt-Nanopartikeln aus einer Precursor-Suspension. Die Abscheidung erfolgt auf einer Scheibe aus Glaskohlenstoff. Dieses Substrat dient als Modellsubstrat und kann aufgrund der fehlenden Gasdurchlässigkeit und Porosität nicht für die Brennstoffzellentechnologie verwendet werden.

Es war daher eine Aufgabe der vorliegenden Erfindung, ein Verfahren zur elektrochemischen Abscheidung von Katalysatorpartikeln auf leitfähigen, porösen Substratmaterialien bereitzustellen, das wirtschaftlich und kostengünstig ist und auf die Verwendung einer Membran als Festelektrolyt verzichtet. Es soll die Abscheidung von sehr feinen Katalysatorpartikeln im Nanometerbereich ermöglichen und für eine kontinuierliche Serienfertigung geeignet sein. Weiterhin war es eine Aufgabe der vorliegenden Erfindung, eine Vorrichtung zur Durchführung des Verfahrens bereitzustellen.

Diese Aufgaben werden gemäß der vorliegenden Erfindung durch die Bereitstellung eines Verfahrens nach Anspruch 1 sowie der dazu benötigten Vorrichtung nach Anspruch 16 gelöst. Bevorzugte erfindungsgemäße Ausführungsformen sind in den jeweils nachgeordneten Unteransprüchen beschrieben.

Die vorliegende Erfindung betrifft ein Verfahren zur elektrochemischen Abscheidung von Katalysatorpartikeln auf einem kohlefaserhaltigen Substrat, umfassend die Schritte
a) Aufbringen einer Precursor-Suspension, enthaltend Ionomer, ein pulverförmiges Kohlenstoffmaterial sowie mindestens eine Metallverbindung, auf ein kohlefaserhaltiges Substrat,
b) Trocknen der Precursor-Suspension,
c) Elektrochemische Abscheidung der Katalysatorpartikel auf dem Kohlefasersubstrat in einem wässrigen Elektrolyten,
wobei das kohlefaserhaltige Substrat eine Ausgleichsschicht aufweist und eine Luftdurchlässigkeit (nach GURLEY) von < 20 cm³/(cm²s) besitzt.

Das Verfahren kann weiterhin einen Reinigungsschritt zur Entfernung von ionischen Verunreinigungen nach der Abscheidung der Metallpartikel sowie einen Trocknungsschritt umfassen.

Die Erfindung umfasst weiterhin eine Vorrichtung zur elektrochemischen Abscheidung von Katalysatorpartikeln auf einem kohlefaserhaltigen Substrat, umfassend
a) eine Halterung (6) mit Dichtungen (7) für das mit einer Precursor-Suspension beschichtete kohlefaserhaltiges Substrat (1)
b) ein Behältnis für einen wässrigen Elektrolyten (2) über dem in die Halterung eingebrachten Substrat, wobei dieses Behältnis mit Hilfe der Halterung (6) sowie der Dichtungen (7) geschaften wird,
c) elektrische Kontakte (3), (4) und (5) zur Erzeugung eines elektrischen Feldes in dem beschichteten kohlefaserhaltigen Substrat, sowie
d) Mittel (2a) zur Zuführung und Ableitung des wässrigen Elektrolyten.

Die Vorrichtung kann darüber hinaus so gestaltet sein, dass sie für die kontinuierliche Beschichtung von bandförmigen kohlefaserhaltigen Substraten geeignet ist. Sie weist dann weiterhin Einrichtungen für die Reinigung und/oder Trocknung der Substratmaterialien und gegebenenfalls für deren Handling und Transport auf. Sie kann weiterhin Mess- und Regeleinrichtungen zur Durchführung der elektrochemischen Abscheidung, insbesondere z.B. Galvanostaten, Potentiometer etc. umfassen.

Beim erfindungsgemäßen elektrochemischen Verfahren werden Katalysatorpartikel aus einer Precursor-Suspension auf einem kohlefaserhaltigen Substrat abgeschieden. Die Precursor-Suspension weist als Komponenten eine Ionomerzubereitung, ein pulverförmiges Kohlenstoffmaterial sowie mindestens eine Metallverbindung auf.

Als pulverförmiges Kohlenstoffmaterial können hochoberflächige, leitfähige Ruße, Furnace-Ruße, Acetylen-Ruße, leitfähige Kohlenstofffasern, Graphite, Aktivkohlen oder Mischungen davon eingesetzt werden. Beispiele sind Ketjenblack EC (Fa. Akzo) oder Vulcan XC72 (Fa. Cabot).

Die Ionomerzubereitung kann als wässrige Ionomerdispersionen oder alkoholische Ionomerlösung zum Einsatz kommen und wird von verschiedenen Herstellern angeboten. Bevorzugt wird ein Tetrafluorethylen-Fluorvinylether-Copolymer mit Säurefunktionen, insbesondere mit Sulfonsäuregruppen, verwendet. Beispiele sind 10 Gew. % Nafion® in wässriger Dispersion (von Fa. DuPont, USA) oder 5 Gew. % Nafion® in Isopropanol/Wasser (von Fa. Aldrich Chemicals). Es sind jedoch auch andere, insbesondere fluorfreie Ionomermaterialien, wie sulfonierte Polyetherketone oder Arylketone oder Polybenzimidazole sowie deren Gemische als Dispersionen oder Lösungen einsetzbar.

Als Edelmetallsalze kommen wasserlösliche Salze der Edelmetalle Pt, Ru, Ag, Au, Pd, Rh, Os oder Ir oder deren Gemische zum Einsatz, insbesondere Chloride, Nitrate, Sulfate oder Acetate. Beispiele für Pt sind Hexachloroplatin(IV)säure (H₂PtC1₆), Tetrachloroplatin(II)säure (H₂PtCl₄), Platin(II)chlorid, Platin-tetraminnitrat, Platin(II)nitrat (Pt(NO₃)₂) oder Hexahydroxo-Pt(IV)-salze. Beispiele für Ruthenium sind Ruthenium(III)chlorid (RuCl₃), Ruthenium(III)acetat, Ruthen(III)-nitrosylnitrat. Als Metallsalze können weiterhin wasserlösliche Verbindungen der Übergangsmetalle des Periodensystems der Elemente verwendet werden, beispielsweise wasserlösliche Salze der Metalle Fe, Co, Ni, Cu, Zn, Ti, V, Cr, W, Mo sowie Gemische davon. Beispiele sind CoCl₂, Cr(NO₃)₂, NiCl₂ oder Cu(NO₃)₂.

Mit Hilfe des hier beschriebenen elektrochemischen Verfahrens lassen sich edelmetallhaltige Legierungen, wie beispielsweise PtRu, PtNi, PtCr, PtCo oder Pt₃Co aus Precursor-Suspensionen abscheiden, die mehrere Metallsalze enthalten.

Die Suspension kann weitere Additive, wie beispielsweise Netzmittel, Dispergiermittel, Bindemittel, Verdickungsmittel, Stabilisatoren oder Antioxidationsmittel enthalten und kann für das jeweilige Auftragsverfahren maßgeschneidert werden. Suspensionen für den Auftrag mittels Siebdruck sind beispielsweise pastenförmig. Zur Herstellung der Suspension werden die Komponenten innig vermischt. Hierzu sind konventionelle Dispergierverfahren (wie beispielsweise Ultraschall, Dissolver, Rührwerke, Walzwerke, Perlmühlen etc) geeignet.

Vorzugsweise wird die Precursor-Suspension auf leitfähige, kohlefaserhaltige Substrate aufgebracht. Geeignete Materialien sind Kohlefaserpapiere oder Kohlefaservliese (sog. "non-woven materials") wie sie von den Firmen Toray (Japan), Textron (USA), ETEK (USA) oder SGL-Carbon (Deutschland) kommerziell erhältlich sind. Die kohlefaserhaltigen Substrate können weiterhin graphitiert oder carbonisiert sein. Das kohlenfaserhaltige Substrat (auch "Gasverteilersubstrat" genannt) kann hydrophobiert sein und weiterhin Gewebeanteile besitzen. Es kann als Einzelblatt oder für kontinuierliche Verfahren als Rollenware verwendet werden.

Es hat sich gezeigt, dass durch das erfindungsgemäße Verfahren besonders feine Katalysatorpartikel erzeugt werden können. Zur Abscheidung dieser besonders feinen Katalysatorpartikel (d.h. Partikel mit einem mittleren Durchmesser ≤ 5 nm) hat sich die Verwendung von Substraten bewährt, die eine feine Faserstruktur aufweisen, wie beispielsweise Kohlefaservliese oder Kohlefaserpapiere (d.h. nicht gewebte Materialien, sogenannte "non-woven materials"). Die Dicke der Kohlenstofffasern in diesen Substraten liegt im Bereich von 0,5 bis 50 µm, vorzugsweise im Bereich von 0,5 bis 20 µm. Die feinen Fasern dieser Kohlefasersubstrate erzeugen Bereiche sehr hoher Stromdichte, z.B. an den Enden, Spitzen und Kanten der Fasern. Nach dem Auftrag der Precursor-Suspension kommen diese Bereiche in Kontakt mit den Metallverbindungen in der Precursorschicht. Da prinzipiell die Teilchengröße der abzuscheidenden Partikel mit wachsender Stromdichte abnimmt, gelingt es auf diese Weise, sehr kleine Katalysatorpartikel abzuscheiden. Weiterhin wird die Bildung von Partikelagglomeraten vermieden.

Zur Erzeugung der besonders feinen Katalysatorpartikel (d.h. Partikel ≤ 5 nm) hat sich weiterhin die Verwendung von kohlefaserhaltigen Substraten bewährt, die eine sogenannte Ausgleichsschicht ("Microlayer" oder "Microporous layer") besitzen. Diese Ausgleichsschicht ist elektrisch leitfähig und enthält typischerweise ein Gemisch von leitfähigem Ruß und hydrophobem Polymer, beispielsweise PTFE. Sie ist in der Regel einseitig (d.h. auf der nach dem Zusammenbau der Membran zugewandten Seite) auf das Substrat aufgebracht und besitzt eine sehr feine Porenstruktur. In den feinen Poren der Ausgleichsschicht können sich wiederum Bereiche sehr hoher Stromdichte bilden, die zu einer Abscheidung sehr kleiner Partikel führen.

Als Maß für die Porenstruktur des Substrates kann die Luftdurchlässigkeit ("air permeability" nach GURLEY) herangezogen werden. Die kohlefaserhaltigen Substrate weisen eine Luftdurchlässigkeit ("air permeability" nach GURLEY) von < 20 cm³/(cm²s), vorzugsweise < 10 cm³/(cm²s) und besonders bevorzugt < 5 cm³/(cm²s) auf (bestimmt mit einem Standard GURLEY-Densometer; z.B. Modell 4118 oder 4340, z.B. nach ISO 5636-5). Substrate mit Luftdurchlässigkeitswerten über 20 cm³/(cm²s) weisen in der Regel keine Ausgleichsschicht auf und/oder sind aufgrund ihrer groben Porenstruktur weniger geeignet.

Die Schichtdicke der Ausgleichsschicht sollte im Bereich von 5 bis 100 µm, vorzugsweise 10 bis 50 µm liegen. Beste Ergebnisse werden mit Substraten erzielt, die eine Ausgleichsschicht von etwa 20 µm Dicke aufweisen.

Beispiele für besonders geeignete Substrate sind die Sigracet GDL Substrate des Typs "C" (beispielsweise GDL 30 BC, oder GDL 31 BC (Fa. SGL Technologies GmbH, Meitingen/DE) oder das Substrat ETEK LT 1200-N (PEMEAS Fuel Cell Technologies, Somerset, New Jersey/USA).

Wenn die Precursor-Suspension auf die Ausgleichsschicht des kohlefaserhaltigen Substrates aufgetragen wird, lässt sich ein zu tiefes Eindringen der Suspension in die offenen Porenstruktur des kohlefaserhaltigen Substrates verhindern. Die Katalysatorpartikel können damit in einem schmalen, begrenzten Bereich an der Oberfläche des Substrates abgeschieden werden.

Der Auftrag der Precursor-Suspension auf die Ausgleichsschicht des kohlefaserhaltigen Substrates kann mit bekannten Verfahren wie beispielsweise Sprühen, Tauchen, Rakeln, Pinseln, Offsetdruck, Siebdruck oder Schablonendruck erfolgen. Vorzugsweise wird das "Airbrush"- Verfahren verwendet, wobei die Viskosität der Suspension entsprechend niedrig eingestellt wird. Das Substrat wird zur besseren Stabilität in einem Rahmen fixiert, die Auftragung sollte langsam und gleichmäßig erfolgen, so dass die Schicht bereits während des Sprühvorgangs antrocknet. Bei stark hydrophoben Substraten kann die Suspension in mehreren Schritten aufgetragen werden, wobei zwischen den Sprühvorgängen eine Zwischentrocknung erfolgen kann. Die Suspension dringt nach dem Auftrag etwas in die Ausgleichsschicht ein. Dadurch wird die Haftung der Precursor-Suspension an der Substratoberfläche verbessert.

Vor der Elektrodeposition wird die aufgetragene Precursor-Suspension getrocknet. Sie bildet damit eine Precursorschicht aus. Dies kann durch konventionelle Trocknungsverfahren, beispielsweise im Trockenschrank, mittels Vakuum, durch Umluft oder Infrarot, gegebenenfalls auch in kontinuierlichen Verfahren erfolgen. Der Trocknungsprozess kann unter Schutzgasatmosphäre (z.B. Stickstoff, Argon oder Vakuum) bei Raumtemperatur oder bei erhöhten Temperaturen (bis max. 130°C) durchgeführt werden, die Trocknungszeiten liegen je nach Verfahren zwischen einigen Minuten und einigen Stunden. Die Schichtdicke der Precursorschicht bzw. die Menge der Precursor-Suspension ist so zu wählen, dass zwischen 0,01 bis 5 mg Metall/cm², vorzugsweise zwischen 0,1 und 4 mg Metall/cm², abgeschieden werden. Die Schichtdicke der Precursorschicht liegt nach der Trocknung typischerweise im Bereich von 5 bis 100 µm, vorzugsweise im Bereich von 5 bis 50 µm.

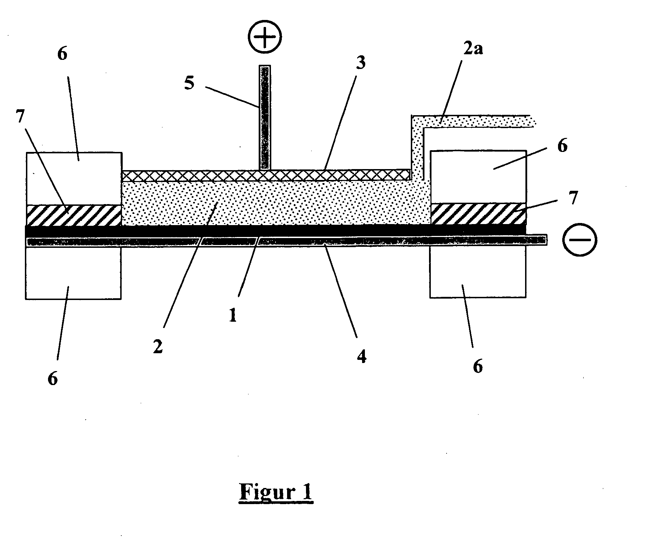

Nach der Trocknung werden die Metallionen in der getrockneten Precursor-Suspension reduziert. Hierzu wird das beschichtete leitfähige Substrat in eine Vorrichtung eingelegt, die eine Halterung für das Substrat aufweist und Mittel zur Erzeugung und Einstellung eines flüssigen Elektrolyten über dem in die Halterung eingebrachten Substrat besitzt. Der Elektrolyt befindet sich dabei in einem Behältnis oberhalb des Substrates, das von einem Teflonrahmen sowie ggf. Dichtungen gebildet wird. Eine schematische Skizze der Vorrichtung zur elektrochemischen Abscheidung der Katalysatorpartikel ist in **Figur 1** dargestellt.

Das kohlefaserhaltige Substrat (1) wird auf eine kathodische Kontaktierplatte (4) aufgebracht. Mit Hilfe eines Rahmens aus Kunststoff (6), vorzugsweise aus Teflon, sowie der Dichtungen (7) wird ein Behältnis für den wässrigen Elektrolyten (2) oberhalb des Substrates geschaffen. Das Behältnis besitzt eine Zu- bzw Ableitung (2a) für den Transport des wässrigen Elektrolyten während des Prozesses. Die anodische Kontaktierung erfolgt oberhalb des Elektrolyten mit Hilfe der Platte (3) und der Zuleitung (5). Für die anodische Kontaktierung ("Gegenelektrode") kann neben Glaskohlenstoff beispielsweise ein Platin-Netz verwendet werden, das durch seine Dimensionierung die elektrochemisch aktive Fläche auf dem leitfähigen Substrat vorgibt.

Als wässriger Elektrolyt können verdünnte Säuren, vorzugsweise verdünnte Schwefelsäure oder Perchlorsäure in Konzentrationen von 0,5 bis 2 mol/l eingesetzt werden. Der Abstand zwischen den beiden Elektroden sollte möglichst gering und konstant sein, um Stromdichteschwankungen zu vermeiden. Der Abstand liegt vorzugsweise im Bereich von 1 mm bis 20 mm. Die Elektrolytmenge sollte möglichst niedrig und in konstanter Menge gehalten werden. Die Vorrichtung kann darüber hinaus so gestaltet sein, dass sie für die kontinuierliche Beschichtung von bandförmigen leitfähigen Materialien geeignet ist. Sie weist dann weiterhin Einrichtungen für die Reinigung und/oder Trocknung der Substratmaterialien und gegebenenfalls für deren Handling und Transport auf.

Die Verfahrensparameter zur elektrochemischen Abscheidung mit der gepulsten Elektrodeposition ("pulsed electrodeposition", PED) sind dem Fachmann bekannt. Details hierzu können der bereits erwähnten Publikation von M.S. Löffler, B. Groß, H. Natter, R. Hempelmann, Th. Krajewski und J. Divisek (Phys. Chem. Chem. Phys., 2001, 3, Seiten 333 - 336) entnommen werden. Das Pulsverfahren wird aus gerätetechnischen Gründen bevorzugt im galvanostatischen Modus (d.h. bei konstanter Stromstärke) durchgeführt. Es kann jedoch auch im potentiostatischen Betrieb (d.h. bei konstanter Spannung) betrieben werden.

Für den galvanostatischen Betrieb haben sich die folgenden Einstellungen als vorteilhaft erwiesen. Die Pulsstromdichten (Iₚ) liegen vorzugsweise im Bereich von 10 bis 5000 mA/cm². Zur Aufrechterhaltung der Stromstärke und zur Gewährleistung der Partikelgröße wird eine Spannung im Bereich von 0,1 bis 20 V, vorzugsweise im Bereich von 5 bis 20 V benötigt. Die Pulsweite liegt im Bereich von 0,5 bis 10 Millisekunden ("tₒₙ - time"), die Pulspausen ("t_{off} - time") bei 0,1 bis 10 Millisekunden. Die Pulsfrequenz liegt bevorzugt im Bereich von 500 bis 1000 Hertz. Die Abscheidezeiten liegen in der Regel zwischen 1 und 20 Minuten, bevorzugt bei Raumtemperatur.

Insbesondere ist darauf zu achten, dass vor dem Einfüllen des Elektrolyten eine Pulsspannung angelegt wird. Sobald der Elektrolyt eingefüllt ist, schließt sich der Stromkreis und die gepulste Elektrodeposition beginnt unmittelbar. Es hat sich gezeigt, dass dadurch ein frühzeitiges Herauslösen der Metallsalze aus der Precursorschicht verhindert wird und die Metallsalze somit nicht in den Elektrolyten diffundieren können. Dadurch wird eine Kontamination des Elektrolyten verhindert und Edelmetallverluste vermieden. Weiterhin wird die Abscheidung von sehr feinen Katalysatorpartikeln im Nanometerbereich erreicht, da bei der Bildung der Katalysatorpartikel der Prozess der Nukleation (Keimbildung) gegenüber dem Prozess des Partikelwachstums (z.B. durch Metallabscheidung aus dem Elektrolyten) favorisiert ist.

Für die wässrige Reinigung der Substrate nach der Pulsabscheidung hat sich voll entsalztes Wasser ("VE-Wasser") bewährt. Durch ein gründliches Spülen mit warmen VE-Wasser lassen sich Elektrolytreste, Salzrückstände oder sonstige Verunreinigungen leicht entfernen. Gegebenenfalls kann die Reinigungswirkung mit Ultraschall verbessert werden.

Die Trocknung der gereinigte Substrate kann in konventionellen Trocknungsvorrichtungen (z.B. Trockenschrank, Umluft, Heißluft, IR) durchgeführt werden. Im Falle einer automatisierten Serienfertigung können die Reinigungs- und Trocknungsschritte in eine kontinuierliche Anlage integriert werden.

Die erfindungsgemäß hergestellten katalysatorbeschichteten Substrate können als Elektroden (vorzugsweise Gasdiffusionselektroden) mit Ionomermembranen in den bekannten Verfahren (z.B. Laminieren) zu mehrlagigen Membran-Elektroden-Einheiten verarbeitet werden. Das erfindungsgemäße Verfahren ermöglicht die Herstellung von Elektroden, die mit niedriger Edelmetallbeladung eine hohe elektrische Leistung in Brennstoffzellen-Stacks bewirken und damit zu einem geringen Edelmetallverbrauch beitragen.

Das Verfahren ist für die kontinuierliche Fertigung von Membran-Elektroden-Einheiten (MEEs) sehr gut geeignet. Die zugehörige Vorrichtung zeichnet sich durch einen einfachen Aufbau und eine leichte Skalierbarkeit in Hinblick auf eine kontinuierliche Serienfertigung aus.

### Experimentelles

Zur Durchführung des elektrochemischen Pulsverfahrens wird ein programmierbarer Pulsgenerator (Typ HAMEG HM 8130, Fa. Hameg Elektronik, DE) verwendet, mit dem die Pulsweite und Pulsstromdichte eingestellt werden. Als Spannungsquelle wird ein Galvanostat der Fa. KEPCO Electronic Inc. (Illinois, USA) eingesetzt.

Die Ermittlung der Partikelgrößen erfolgt mittels TEM (High Resolution Transmissions-Elektronenspektroskopie). Die Bestimmung der Kristallinität und der metallischen Zusammensetzung der Partikel erfolgt mittels XRD (Röntgendiffraktometrie, Pulverproben).

Die Erfindung wird in den nachfolgenden Beispielen näher erläutert. Die Beispiele dienen lediglich zur Erläuterung der Erfindung und sollen den Schutzbereich nicht einschränken.

### BEISPIELE

### Beispiel 1

### Beschichtung mit Katalysatorpartikeln (Pt₃Co; Beladung 0,3 mg/cm²) Kohlefasersubstrat mit Ausgleichsschicht

Zur Beschichtung eines Kohlefasersubstrates mit einer Fläche von 100 cm² wird eine Precursorsuspension hergestellt, die aus den folgenden Komponenten besteht:

| | |
|---|---|
| 2,5 ml | Nafion© - Dispersion (10 Gew.-% in Wasser; Fa. DuPont) |
| 16,0 ml | Isopropanol |
| 10,0 mg | Leitfähigkeitsruß (Ketjenblack Typ EC 300 J, Fa. Akzo) |
| 90,0 mg | Hexachloroplatinsäure (H₂PtCl₆ x H₂O; fest, Fa. Chempur) |
| 8,7 mg | Kobaltchlorid (CoCl₂, fest, Fa. Chempur, Karlsruhe) |

Die einzelnen Bestandteile werden eingewogen und in einem 50 ml Gefäß mit Hilfe von Ultraschall (35 kHz) 10 min dispergiert. Die Suspension wird dann im Airbrush-Verfahren auf ein Kohlefasersubstrat des Typs SIGRACET 30 BC ( Fa. SGL Carbon Group, Meitingen, DE) aufgetragen. Material: Graphitiertes Carbonfaser-Vlies, Hydrophobierung 5 Gew. % PTFE, Dicke 330 µm, mit Ausgleichsschicht (Dicke ca. 20 µm, Luftdurchlässigkeit nach GURLEY: 0,5 cm³/cm²s). Die Dicke der Kohlefasern liegt im Bereich von 10 µm (bestimmt mittels REM/TEM).

Für das Airbrush-Verfahren wird ein Sprühdruck von 2,5 bar verwendet, als Sprühgas dient Stickstoff. Die Trocknung erfolgt bei 40°C für 30 min im Trockenschrank unter Stickstoffatmosphäre. Anschließend werden die Metallionen in der Precursorschicht elektrochemisch durch ein Pulsverfahren reduziert (Elektrolyt Schwefelsäure, Konzentration 2 mol/1; Abscheidedauer 15 min bei Raumtemperatur).

### Pulsparameter zur Abscheidung:

| | |
|---|---|
| tₒₙ : | 1 ms |
| t_{off} : | 0,5 ms |
| Iₘ : | 1000 mA/cm² |
| Frequenz: | 666,67 Hz |
| Spannung (Amplitude): | 15 V |

Das Substrat wird nach der Abscheidung gründlich mit destilliertem Wasser gewaschen, um Elektrolyt und Chloridionen zu entfernen. Nach der Trocknung (40°C, Umlufttrockenschrank) erhält man ein mit Katalysatorpartikeln beschichtetes Kohlefasersubstrat mit den folgenden Eigenschaften:

| | |
|---|---|
| Katalysatorbeladung: | 0,3 mg/cm² Pt₃Co |
| Mittlere Partikelgröße (TEM): | 2 nm |
| Röntgenstruktur (XRD): | nanokristalline legierte Partikel |

### Beispiel 2

### Beschichtung mit Katalysatorpartikeln (Pt₃Co; Beladung 1 mg/cm²) Kohlefasersubstrat mit Ausgleichsschicht

Zur Beschichtung eines Kohlefasersubstrates mit einer Fläche von 100 cm² wird eine Precursor-Suspension hergestellt, die aus den folgenden Komponenten besteht:

| | |
|---|---|
| 2,5 ml | Nafion© -Lösung (10% in Wasser ; Fa. DuPont) |
| 16,0 ml | Isopropanol |
| 10,0 mg | Leitfähigkeitsruß (Ketjenblack Typ EC 300 J, Fa. Akzo) |
| 180,0 mg | Hexachloroplatinsäure (H₂PtCl₆ x H₂O; fest, Fa. Chempur) |
| 26,0 mg | Cobaltchlorid (CoCl₂, fest, Fa. Chempur) |

Die Suspension wird wie in Beispiel 1 beschrieben hergestellt und im Airbrush-Verfahren auf ein Kohlefasersubstrat des Typs SIGRACET 30 BC (Fa. SGL Carbon Group, Meitingen) aufgetragen (Eigenschaften siehe Beispiel 1). Die Pulsparameter zur elektrochemischen Abscheidung sind in Beispiel 1 genannt. Nach Waschen und Trocknen erhält man ein mit Katalysatorpartikeln beschichtetes Kohlefasersubstrat mit den folgenden Eigenschaften:

| | |
|---|---|
| Katalysatorbeladung: | 1 mg/cm² Pt₃Co |
| Mittlere Partikelgröße (TEM): | 2 nm |
| Röntgenstruktur (XRD): | nanokristalline legierte Partikel |

### Beispiel 3

### Beschichtung mit Katalysatorpartikeln (Pt; Beladung 0,3 mg/cm²) Kohlefasersubstrat mit Ausgleichsschicht

Zur Beschichtung eines Kohlefasersubstrates mit einer Fläche von 100 cm² wird eine Precursorsuspension hergestellt, die aus den folgenden Komponenten besteht:

| | |
|---|---|
| 2,5 ml | Nafion© - Dispersion (10 Gew.-% in Wasser; Fa. DuPont) |
| 16,0 ml | Isopropanol |
| 10,0 mg | Leitfähigkeitsruß (Ketjenblack Typ EC 300 J, Fa. Akzo) |
| 64,0 mg | Hexachloroplatinsäure (H₂PtC1₆ x H₂O; fest, Fa. Chempur) |

Die einzelnen Bestandteile werden eingewogen und in einem 50 ml Gefäß mit Hilfe von Ultraschall dispergiert. Die Suspension wird, wie in Beispiel 1 beschrieben, im Airbrush-Verfahren auf ein Kohlefasersubstrat des Typs SIGRACET 30 BC (Fa. SGL Carbon Group, Meitingen) aufgetragen (Eigenschaften siehe Beispiel 1). Die Trocknung erfolgt bei 40°C für 30 min im Trockenschrank. Anschließend wird Platin in der Precursorschicht elektrochemisch abgeschieden (Parameter wie Beispiel 1). Die Reinigung und Trocknung des Substrates erfolgt wie in Beispiel 1 angegeben. Man erhält ein mit Pt-Katalysatorpartikeln beschichtetes Kohlefasersubstrat mit den folgenden Eigenschaften:

| | |
|---|---|
| Katalysatorbeladung: | 0,3 mg Pt/cm² |
| Mittlere Partikelgröße (TEM): | 2 nm |
| Röntgenstruktur (XRD): | nanokristalline Partikel |

### Beispiel 4

### Beschichtung mit Katalysatorpartikeln (Pt₃Co; Beladung 0,3 mg/cm²) Kohlefasersubstrat mit Ausgleichsschicht

Zur Beschichtung eines Kohlefasersubstrates mit einer Fläche von 100 cm² wird eine Precursor-Suspension gemäß Beispiel 1 hergestellt.
Die Suspension wird im Airbrush-Verfahren auf ein Kohlefasersubstrat des Typs ETEK LT 1200-N (Fa. PEMEAS, ETEK Division, Somerset, NJ, 08873 USA) aufgetragen. Material: Kohlefaservlies, ungewebt ("non-woven"), hydrophobiert, mit Ausgleichsschicht (Dicke ca. 25 µm); Luftdurchlässigkeit nach GURLEY: 0,5 cm³/cm²s).

Für das Airbrush-Verfahren wird ein Sprühdruck von 2,5 bar verwendet, als Sprühgas dient Stickstoff. Die Trocknung erfolgt bei 40°C für 30 min im Trockenschrank unter Stickstoffatmosphäre. Anschließend werden die Metallionen in der Precursorschicht elektrochemisch durch ein Pulsverfahren reduziert (Parameter wie in Beispiel 1 angegeben). Nach der Reinigung und Trocknung (40°C, Umlufttrockenschrank) erhält man ein mit Katalysatorpartikeln beschichtetes Kohlefasersubstrat mit den folgenden Eigenschaften:

| | |
|---|---|
| Katalysatorbeladung: | 0,3 mg/cm² Pt₃Co |
| Mittlere Partikelgröße (TEM): | 2 - 5 nm |
| Röntgenstruktur (XRD): | nanokristalline legierte Partikel |

### Vergleichsbeispiel (VB 1)

### Beschichtung mit Katalysatorpartikeln (Pt₃Co; Beladung 0,3 mg/cm²) Kohlefasersubstrat ohne Ausgleichsschicht

Zur Beschichtung eines Kohlefasersubstrates mit einer Fläche von 100 cm² wird eine Precursor-Suspension gemäß Beispiel 1 hergestellt. Die Suspension wird im Airbrush-Verfahren auf ein Kohlefasersubstrat des Typs SIGRACET 30 BA (Fa. SGL Carbon Group, Meitingen) aufgetragen. Das Kohlefasersubstrat ist ein graphitiertes Carbonfaser-Vlies mit einer Hydrophobierung aus 5 Gew. % PTFE, die Dicke beträgt 310 µm. Das Substrat weist keine Ausgleichschicht auf, die Luftdurchlässigkeit nach GURLEY beträgt 40 cm³/(cm²s).

Die Trocknung der Suspension erfolgt bei 40°C für 30 min im Trockenschrank unter Stickstoff. Anschließend werden die Metalle in der Precursorschicht elektrochemisch abgeschieden (Parameter wie in Beispiel 1). Man erhält ein mit Pt₃Co-Katalysatorpartikeln beschichtetes Kohlefasersubstrat mit den folgenden Eigenschaften:

| | |
|---|---|
| Katalysatorbeladung: | 0,3 mg Pt₃Co/cm² |
| Mittlere Partikelgröße (TEM): | 20 - 30 nm |
| Röntgenstruktur (XRD): | nanokristalline legierte Partikel |

Wie dieses Vergleichsbeispiel zeigt, sind Kohlefasersubstrate ohne Ausgleichsschicht zur Abscheidung von sehr feinen Katalysatorpartikeln nicht geeignet.

## Patentansprüche

1. Verfahren zur elektrochemischen Abscheidung von Katalysatorpartikeln auf einem kohlefaserhaltigen Substrat, umfassend die Schritte
a) Aufbringen einer Precursor-Suspension, enthaltend Ionomer, ein pulverförmiges Kohlenstoffmaterial sowie mindestens eine Metallverbindung auf ein kohlefaserhaltiges Substrat,
b) Trocknen der Precursor-Suspension,
c) Elektrochemische Abscheidung der Katalysatorpartikel auf dem kohlefaserhaltigen Substrat in einem wässrigen Elektrolyten;
wobei das kohlefaserhaltige Substrat eine Ausgleichsschicht aufweist und eine Luftdurchlässigkeit (nach GURLEY) von < 20 cm³/(cm² s) besitzt.

2. Verfahren nach Anspruch 1, wobei das kohlefaserhaltige Substrat ein Kohlefaservlies oder Kohlefaserpapier ist.

3. Verfahren nach Anspruch 1 oder 2, wobei die Precursor-Suspension als Metallverbindungen Salze der Edelmetalle Platin (Pt), Ruthenium (Ru), Rhodium (Rh), Osmium (Os), Iridium, (Ir), Silber (Ag), Palladium (Pd) oder Gold (Au) oder Gemische davon enthält.

4. Verfahren nach einem der Ansprüche 1 bis 3, wobei die Precursor-Suspension weiterhin Metallverbindungen der Metalle Fe, Co, Ni, Cu, Zn, Ti, V, Cr, W, Mo oder Gemische davon enthält.

5. Verfahren nach einem der Ansprüche 1 bis 4, wobei die Precursor-Suspension weiterhin Additive wie Netzmittel, Dispergiermittel, Bindemittel, Verdickungsmittel, Stabilisatoren oder Antioxidationsmittel enthält.

6. Verfahren nach einem der Ansprüche 1 bis 5, wobei das Ionomer protonenleitende Polymere wie beispielsweise Tetrafluorethylen-Fluorvinylether-Copolymere mit Sulfonsäuregruppen umfasst.

7. Verfahren nach einem der Ansprüche 1 bis 6, wobei das pulverförmige Kohlenstoffmaterial hochoberflächige leitfähige Ruße, Furnace-Raße, Acetylen-Ruße, leitfähige Kohlenstofffasern, Graphite, Aktivkohlen oder Mischungen davon umfasst.

8. Verfahren nach einem der Ansprüche 1 bis 7, wobei das Aufbringen der Suspension auf das kohlefaserhaltige Substrat durch Methoden wie Sprühen, Tauchen, Rakeln, Pinseln, Offsetdruck, Siebdruck oder Schablonendruck erfolgt.

9. Verfahren nach einem der Ansprüche 1 bis 8 wobei als wässriger Elektrolyt Schwefelsäure oder Perchlorsäure oder Gemische davon verwendet werden.

10. Verfahren nach einem der Ansprüche 1 bis 9, wobei die elektrochemische Abscheidung in einem Pulsverfahren erfolgt.

11. Verfahren nach einem der Ansprüche 1 bis 10, wobei das Pulsverfahren galvanostatisch erfolgt.

12. Verfahren nach einem der Ansprüche 1 bis 11, wobei das Pulsverfahren bei einer Spannung im Bereich von 0,1 bis 20 V erfolgt.

13. Verfahren nach einem der Ansprüche 1 bis 12, wobei das Pulsverfahren bei einer Pulsstromdichte (Iₚ) im Bereich von 10 bis 5000 mA/cm² erfolgt.

14. Verfahren nach einem der Ansprüche 1 bis 13, wobei das Trocknen der Precursor-Suspension bei Temperaturen von 20 bis 130°C durchgeführt wird.

15. Verfahren nach einem der Ansprüche 1 bis 14, weiterhin umfassend eine Reinigung und/oder eine Trocknung des beschichteten Kohlefasersubstrates nach Abscheidung der Katalysatorpartikel.

16. Vorrichtung zur elektrochemischen Abscheidung von Katalysatorpartikeln auf einem kohlefaserhaltigen Substrat gemäß dem Verfahren nach Anspruch 1, umfassend
a) eine Halterung (6) mit Dichtungen (7) für das mit einer Precursor-Suspension beschichtete kohlefaserhaltiges Substrat (1)
b) ein Behältnis für einen wässrigen Elektrolyten (2) über dem in die Halterung eingebrachten Substrat, wobei dieses Behältnis mit Hilfe der Halterung (6) sowie der Dichtungen (7) geschaffen wird,
c) elektrische Kontakte (3), (4) und (5) zur Erzeugung eines elektrischen Feldes in dem beschichteten kohlefaserbaltigen Substrat, sowie
d) Mittel (2a) zur Zuführung und Ableitung des wässrigen Elektrolyten.

17. Vorrichtung nach Anspruch 16, weiterhin umfassend eine Einrichtung zum Aufbringen der Precursor-Suspension auf das kohlefaserhaltige Substrat.

18. Vorrichtung nach Anspruch 16, weiterhin umfassend eine Einrichtung zur Trocknung des beschichteten kohlefaserhaltigen Substrates nach Aufbringen der Precursor-Suspension.

19. Vorrichtung nach Anspruch 16, weiterhin umfassend eine Einrichtung zum Reinigen und Trocknen des beschichteten kohlefaserhaltigen Substrates nach Abscheidung der Katalysatorpartikel.

20. Vorrichtung nach einem der Ansprüche 16 bis 19, weiterhin umfassend Einrichtungen zum kontinuierlichen Betrieb mit bandförmigen Substratmaterialien.

21. Verwendung der nach dem Verfahren gemäß einem der Ansprüche 1 bis 15 beschichteten kohlefaserhaltigen Substrate als Gasdiffusionselektroden für elektrochemischen Vorrichtungen wie Membran-Brennstoffzellen, PEMFC, DMFC, Elektrolyseure oder elektrochemische Sensoren.

22. Verwendung nach Anspruch 21 zur Herstellung von Membran-Elektroden-Einheiten für Polymerelektrolytmembran-Brennstoffzellen.

## Claims

1. Method for the electrochemical deposition of catalyst particles onto a carbon fibre-containing substrate, comprising the steps:
a) application of a precursor suspension containing ionomer, a pulverulent carbon material and at least one metal compound onto a carbon fibre-containing substrate,
b) drying of the precursor suspension,
c) electrochemical deposition of the catalyst particles onto the carbon fibre-containing substrate in an aqueous electrolyte;
wherein the carbon fibre-containing substrate has a compensating layer and exhibits an air permeability (according to GURLEY) of < 20 cm³/ (cm²s).

2. Method according to Claim 1, wherein the carbon fibre-containing substrate is a nonwoven carbon fibre material or carbon fibre paper.

3. Method according to Claim 1 or 2, wherein the precursor suspension contains, as metal compounds, salts of the noble metals platinum (Pt), ruthenium (Ru), rhodium (Rh), osmium (Os), iridium (Ir), silver (Ag), palladium (Pd) or gold (Au) or mixtures thereof.

4. Method according to any one of Claims 1 to 3, wherein the precursor suspension furthermore contains metal compounds of the metals Fe, Co, Ni, Cu, Zn, Ti, V, Cr, W, Mo or mixtures thereof.

5. Method according to any one of Claims 1 to 4, wherein the precursor suspension furthermore contains additives such as wetting agents, dispersants, binders, thickening agents, stabilizers or antioxidants.

6. Method according to any one of Claims 1 to 5, wherein the ionomer comprises proton-conducting polymers, such as, for example, tetrafluoroethylene/fluorovinyl ether copolymers with sulphonic acid groups.

7. Method according to any one of Claims 1 to 6, wherein the pulverulent carbon material comprises high surface area conductive carbon blacks, furnace blacks, acetylene blacks, conductive carbon fibres, graphites, activated carbons or mixtures thereof.

8. Method according to any one of Claims 1 to 7, wherein the application of the suspension to the carbon fibre-containing substrate is performed by methods such as spraying, dipping, doctor-blading, brushing, offset printing, screen printing or stencil printing.

9. Method according to any one of Claims 1 to 8, wherein sulphuric acid or perchloric acid or mixtures thereof are used as aqueous electrolyte.

10. Method according to any one of Claims 1 to 9, wherein the electrochemical deposition is performed in a pulsed method.

11. Method according to any one of Claims 1 to 10, wherein the pulsed method is conducted in the galvanostatic mode.

12. Method according to any one of Claims 1 to 11, wherein the pulsed method is conducted at a voltage in the range from 0.1 to 20 V.

13. Method according to any one of Claims 1 to 12, wherein the pulsed method is conducted at a pulsed current density (Iₚ) in the range from 10 to 5000 mA/cm².

14. Method according to any one of Claims 1 to 13, wherein the drying of the precursor suspension is carried out at temperatures from 20 to 130°C.

15. Method according to any one of Claims 1 to 14, furthermore comprising a purification and/or a drying of the coated carbon fibre substrate after deposition of the catalyst particles.

16. Apparatus for the electrochemical deposition of catalyst particles onto a carbon fibre-containing substrate by the method according to Claim 1, comprising
a) a holder (6) having seals (7) for the carbon fibre-containing substrate (1) coated with a precursor suspension
b) a container for an aqueous electrolyte (2) above the substrate introduced into the holder, said container being created with the aid of the holder (6) and of the seals (7),
c) electrical contacts (3), (4) and (5) for generating an electric field in the coated carbon fibre-containing substrate and
d) means (2a) for supplying and removing the aqueous electrolyte.

17. Apparatus according to Claim 16, furthermore comprising a device for applying the precursor suspension to the carbon fibre-containing substrate.

18. Apparatus according to Claim 16, furthermore comprising a device for drying the coated carbon fibre-containing substrate after application of the precursor suspension.

19. Apparatus according to Claim 16, furthermore comprising a device for purification and drying of the coated carbon fibre-containing substrate after deposition of the catalyst particles.

20. Apparatus according to any one of Claims 16 to 19, furthermore comprising devices for continuous operation with ribbon-like substrate materials.

21. Use of the carbon fibre-containing substrates coated by the method according to any one of Claims 1 to 15 as gas diffusion electrodes for electrochemical devices, such as membrane fuel cells, PEMFC, DMFC, electrolysers or electrochemical sensors.

22. Use according to Claim 21 for the production of membrane electrode units for polymer electrolyte membrane fuel cells.

## Revendications

1. Procédé pour le dépôt électrochimique de particules de catalyseur sur un substrat contenant des fibres de carbone, comprenant les étapes
a) application d'une suspension de précurseur, contenant un ionomère, un matériau carboné sous forme de poudre ainsi qu'au moins un composé métallique sur un substrat contenant des fibres de carbone,
b) séchage de la suspension de précurseur,
c) dépôt électrochimique des particules de catalyseur sur le substrat contenant des fibres de carbone dans un électrolyte aqueux ;
dans lequel le substrat contenant des fibres de carbone présente une couche de compensation et possédant une perméabilité à l'air (selon GURLEY) < 20 cm³/(cm²s).

2. Procédé selon la revendication 1, dans lequel le substrat contenant des fibres de carbone est un non-tissé en fibres de carbone ou un papier en fibres de carbone.

3. Procédé selon l'une quelconque des revendications 1 à 2, dans lequel la suspension de précurseur contient, comme composés métalliques, des sels des métaux nobles platine (Pt), ruthénium (Ru), rhodium (Rh), osmium (Os), iridium (Ir), argent (Ag), palladium (Pd) ou or (Au) ou des mélanges de ceux-ci.

4. Procédé selon l'une quelconque des revendications 1 à 3, dans lequel la suspension de précurseur contient en outre des composés métalliques des métaux Fe, Co, Ni, Cu, Zn, Ti, V, Cr, W, Mo ou leurs mélanges.

5. Procédé selon l'une quelconque des revendications 1 à 4, dans lequel la suspension de précurseur contient en outre des additifs tels que des mouillants, des dispersants, des liants, des épaississants, des stabilisateurs ou des antioxydants.

6. Procédé selon l'une quelconque des revendications 1 à 5, dans lequel l'ionomère comprend des polymères guidant des protons tels que par exemple les copolymères de tétrafluoroéthylène-fluorovinyléther présentant des groupes acide sulfonique.

7. Procédé selon l'une quelconque des revendications 1 à 6, dans lequel le matériau carboné sous forme de poudre comprend des suies conductrices, des noirs de carbone, des noirs d'acétylène, des fibres de carbone conductrices, du graphite, des charbons activés, de grande surface ou des mélanges de ceux-ci.

8. Procédé selon l'une quelconque des revendications 1 à 7, dans lequel l'application de la suspension sur le substrat contenant des fibres de carbone s'effectue par des procédés tels que la pulvérisation, le trempage, le raclage, l'enduction au pinceau, l'impression offset, la sérigraphie ou l'impression au pochoir.

9. Procédé selon l'une quelconque des revendications 1 à 8, dans lequel de l'acide sulfurique ou de l'acide perchlorique ou des mélanges de ceux-ci sont utilisé(s) comme électrolyte aqueux.

10. Procédé selon l'une quelconque des revendications 1 à 9, dans lequel le dépôt électrochimique s'effectue dans un procédé à impulsions.

11. Procédé selon l'une quelconque des revendications 1 à 10, dans lequel le procédé à impulsions est un procédé galvanostatique.

12. Procédé selon l'une quelconque des revendications 1 à 11, dans lequel le procédé à impulsions s'effectue à une tension dans la plage de 0,1 à 20 V.

13. Procédé selon l'une quelconque des revendications 1 à 12, dans lequel le procédé à impulsion s'effectue à une densité de courant d'impulsion (Iₚ) dans la plage de 10 à 5000 mA/cm².

14. Procédé selon l'une quelconque des revendications 1 à 13, dans lequel le séchage de la suspension de précurseur est réalisé à des températures de 20 à 130°C.

15. Procédé selon l'une quelconque des revendications 1 à 14, comprenant en outre un nettoyage et/ou un séchage du substrat en fibres de carbone revêtu après le dépôt des particules de catalyseur.

16. Dispositif pour le dépôt électrochimique de particules de catalyseur sur un substrat contenant des fibres de carbone selon le procédé selon la revendication 1, comprenant
a) un dispositif de fixation (6) équipé de joints (7) pour le substrat (1) contenant des fibres de carbone revêtu par une suspension de précurseur
b) un récipient pour un électrolyte aqueux (2) au-dessus du substrat inséré dans le dispositif de fixation, dans lequel ce récipient est réalisé à l'aide du dispositif de fixation (6) et des joints (7),
c) des contacts électriques (3), (4) et (5) pour générer un champ électrique dans le substrat contenant des fibres de carbone revêtu, et
d) des moyens (2a) pour alimenter et évacuer l'électrolyte aqueux.

17. Dispositif selon la revendication 16, comprenant en outre un dispositif pour appliquer la suspension de précurseur sur le substrat contenant des fibres de carbone.

18. Dispositif selon la revendication 16, comprenant en outre un dispositif pour le séchage du substrat contenant des fibres de carbone revêtu après l'application de la suspension de précurseur.

19. Dispositif selon la revendication 16, comprenant en outre un dispositif pour le nettoyage et le séchage du substrat contenant des fibres de carbone revêtu après le dépôt des particules de catalyseur.

20. Dispositif selon l'une quelconque des revendications 16 à 19, comprenant en outre des dispositifs pour le fonctionnement continu avec des matériaux de substrat en forme de bandes.

21. Utilisation des substrats contenant des fibres de carbone revêtus selon le procédé selon l'une quelconque des revendications 1 à 15 comme électrodes de diffusion de gaz pour des dispositifs électrochimiques tels que des piles à combustible à membrane, des PEMFC (piles à combustible à membrane d'échange de protons), des DMFC (piles à combustible à méthanol direct), des électrolyseurs ou des capteurs électrochimiques.

22. Utilisation selon la revendication 21 pour la réalisation d'unités à électrodes à membrane pour des piles à combustible à membrane électrolytique en polymère.
